# EUROPÄISCHE PATENTSCHRIFT

(11) **EP 1 527 981 B1**
(45) Veröffentlichungstag und Bekanntmachung des Hinweises auf die Patenterteilung: **14.03.2007**
(21) Anmeldenummer: 04105260.6
(22) Anmeldetag: 22.10.2004
(51) Int. Cl.: B62D 11/08

(54) **Notfall-Lenksystem für ein Gleis- oder Raupenfahrzeug**
Steering system in emergency case for a rail gripping or for an endless-track vehicle
Système de direction en cas d'urgence pour un véhicule sur rails ou à chenilles

(30) Priorität: 30.10.2003 US 696841
(43) Veröffentlichungstag der Anmeldung: 04.05.2005
(73) Patentinhaber: DEERE & COMPANY, Moline, Illinois 61265-8098 (US)
(72) Erfinder: Johnson, Douglas Rene, 50701, Waterloo (US)
(74) Vertreter: Holst, Sönke

(56) Entgegenhaltungen:
- PATENT ABSTRACTS OF JAPAN Bd. 011, Nr. 397 (M-655), 25. Dezember 1987 (1987-12-25) & JP 62 163872 A (ISEKI & CO LTD), 20. Juli 1987 (1987-07-20)
- PATENT ABSTRACTS OF JAPAN Bd. 009, Nr. 202 (M-405), 20. August 1985 (1985-08-20) & JP 60 064079 A (KANZAKI KOUKIYUU KOUKI SEISAKUSHO:KK), 12. April 1985 (1985-04-12)
- PATENT ABSTRACTS OF JAPAN Bd. 003, Nr. 151 (M-084), 12. Dezember 1979 (1979-12-12) & JP 54 129623 A (ISEKI & CO LTD), 8. Oktober 1979 (1979-10-08)
- PATENT ABSTRACTS OF JAPAN Bd. 018, Nr. 341 (M-1629), 28. Juni 1994 (1994-06-28) & JP 06 081808 A (HITACHI CONSTR MACH CO LTD), 22. März 1994 (1994-03-22)

## Beschreibung

Die Erfindung betrifft ein Notfall-Lenksystem für ein Gleis- oder Raupenfahrzeug.

Es ist bekannt, dass bei Raupen- oder Gleisfahrzeugen die Lenkung durch selektives Bremsen jeweils einer Raupenkette bzw. Gleiskette erfolgt. Neue Entwicklungen in der Antriebsstrang-Technologie für Raupen- oder Gleisfahrzeuge ermöglichen es, eine Lenkung solcher Fahrzeuge während des normalen Betriebs ohne Verwendung eines selektiven Bremsens zu bewirken. So ist es beispielsweise möglich, ein Raupen- bzw. Gleisfahrzeug mit Hilfe von zwei stufenlos variablen Getrieben bzw. IVT-Getrieben (IVT = Infinitely Variable Transmission) dadurch zu lenken, dass die Ausgangsdrehzahl eines mit einem ersten Antriebsrad verbundenen IVT-Getriebes relativ zur Ausgangsdrehzahl eines mit einem zweiten Antriebsrad verbundenen IVT-Getriebes variiert wird. Ein solches System ist im normalen Betriebszustand sehr effektiv, falls jedoch eine Getriebestörung vorliegt, könnte ein solches Lenksystem nicht mehr verfügbar sein. Einige solcher Gleis- bzw. Raupenfahrzeuge weisen ein Lenksystem auf, bei welchem das Fahrzeug entlang einer Gerade gelenkt wird, falls das Lenksystem gestört ist oder ausfällt. Andere Gleis- bzw. Raupenfahrzeuge, die bei geringer Geschwindigkeit betrieben werden, sehen keine besonderen Ersatz- bzw. Notfall-Lenksysteme vor. In einigen Ländern schreiben verschiedene Vorschriften zum Transportieren bzw. Fortbewegen von Fahrzeugen vor, dass ein Fahrzeughersteller Notfall- oder Ersatzbremsmittel für die von ihm hergestellten oder vertriebenen Fahrzeuge vorsehen muss, so dass ein Fahrzeug auch in dem Fall der Störung bzw. des Ausfalls eines solchen Lenksystems gelenkt werden kann, bis das Fahrzeug zum Stillstand gebracht werden kann.

Aus der JP 62163872 A ist ein Ersatz- oder Notfall-Lenksystem für ein Gleis- oder Raupenfahrzeug gemäß den Merkmalen des Oberbegriffs des Anspruchs 1 bekannt.

Die der Erfindung zugrunde liegende Aufgabe wird darin gesehen, ein Ersatz- oder Notfall-Lenksystem anzugeben, durch die die vorgenannten Probleme überwunden werden. Insbesondere soll ein Ersatz- oder Notfall-Lenksystem angegeben und weitergebildet werden, welches insbesondere im Fall einer Getriebestörung oder eines Getriebeausfalls effektiv bzw. sicher arbeitet und welches bevorzugt mit einer neuartigen Lenktechnologie, wie beispielsweise der Verwendung zweier IVT-Getriebe, kompatibel ist.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Das erfindungsgemäße Ersatz- oder Notfall-Lenksystem für ein Gleis- oder Raupenfahrzeug umfasst eine Flüssigkeitsdruckquelle, ein Betriebsartsteuerventil, ein - vorzugsweise elektronisch betätigbares - Hauptventil, zwei Notfallventile und eine rechte und eine linke Bremse. Die Bremse dient vorzugsweise zu Wartungs- und Servicezwecken. Das Hauptventil ist mit der Flüssigkeitsdruckquelle und dem Betriebsartsteuerventil verbunden. Mindestens ein Notfallventil ist mit dem Betriebsartsteuerventil und der Flüssigkeitsdruckquelle verbunden. Die Bremsen sind mit dem Betriebsartsteuerventil verbunden. In einem normalen Betriebszustand ist das Betriebsartsteuerventil derart ansteuerbar, dass mindestens eine Bremse mit dem Betriebsartsteuerventil und dem Hauptventil hydraulisch verbindbar ist, wobei die Flüssigkeitsdruckquelle zur gleichzeitigen Betätigung der Bremsen hydraulisch mit beiden Bremsen als Reaktion auf ein bedienergesteuertes Bremsen verbindbar ist, falls das Hauptventil betätigt wird. In einem Ersatz- oder Notfallbetrieb ist das Betriebsartsteuerventil derart ansteuerbar, dass die Bremsen mit dem Betriebsartsteuerventil und den Notfallventilen hydraulisch verbindbar sind, wobei die linke und die rechte Bremse selektiv mit der Flüssigkeitsdruckquelle aufgrund einer selektiven Betätigung eines Notfallventils hydraulisch verbindbar ist, wodurch das Fahrzeug auch dann lenkbar ist, wenn das primäre Lenksystem nicht bestimmungsgemäß arbeitet.

Gemäß einer ganz besonders bevorzugten Ausführungsform umfasst das Ersatz- bzw. Notfalllenksystem eine Hydraulikpumpe, einen Hydrospeicher, ein Betriebsartsteuerventil, ein vorzugsweise elektromagnetisch betätigbares Hauptventil und zwei Notfallventile. Das Lenksystem ist mit einer linken und einer rechten Bremse verbunden. Die Hydraulikpumpe und der Hydrospeicher sind beide an eine Haupthydraulikleitung gekoppelt. Das Hauptventil ist mit der Haupthydraulikleitung, einem gemeinsamen Sumpf beziehungsweise Tank und dem Betriebsartsteuerventil verbunden. Die Notfallventile sind jeweils mit der Haupthydraulikleitung, dem Sumpf und dem Betriebsartsteuerventil verbunden. Die Bremsen sind mit dem Betriebsartsteuerventil verbunden. Während des normalen Betriebs des Fahrzeugs ist das Betriebsartsteuerventil derart ansteuerbar, dass die Bremsen mit dem Betriebsartsteuerventil und dem Hauptventil hydraulisch verbindbar sind. Wenn das Hauptventil betätigt bzw. aktiviert wird, steht die Hydraulikpumpe mit den beiden Bremsen - als Reaktion von einem bedienergesteuerten Bremsen - zu deren simultanen Betätigung in hydraulischer Verbindung. In diesem Betriebszustand bzw. zu dieser Zeit sind die Notfallventile von den Bremsen aufgrund der Ventilstellung des Betriebsartsteuerventils getrennt. Im Ersatz- oder Notfallbetrieb wird das Betriebsartsteuerventil derart angesteuert, dass die Bremsen mit dem Betriebsartsteuerventil und den Notfallventilen hydraulisch verbindbar sind. Die Bremsen werden selektiv mit der Hydraulikpumpe und/oder dem Hydrospeicher aufgrund einer selektiven Betätigung der Notfallventile verbunden. Durch das selektive Betätigen entweder der linken oder der rechten Bremse kann das Fahrzeug auch dann gesteuert werden, wenn das primäre Lenksystem nicht ordnungsgemäß arbeitet. In diesem Betriebszustand beziehungsweise zu diesem Zeitpunkt ist das Hauptventil von den Bremsen aufgrund der Ventilstellung des Betriebsartsteuerventils hydraulisch getrennt. Die elektrische Energieversorgung der elektrisch betätigten Ventile des erfindungsgemäßen Notfall-Lenksystems wird von einem elektrischen Generator, insbesondere eine Lichtmaschine, und im Störungsfall des elektrischen Generators, von einem elektrischen Speicher, insbesondere einer Fahrzeugbatterie, zur Verfügung gestellt. Unter Druck stehende Hydraulikflüssigkeit wird unter normalen Betriebsbedingungen von einer Hydraulikpumpe, im Störungsfall der Hydraulikpumpe, von einem Hydrospeicher zur Verfügung gestellt, wobei der Hydrospeicher als Ersatz- bzw. Notfalldruckquelle für das Ersatz- bzw. Notfall-Lenksystem dient.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:

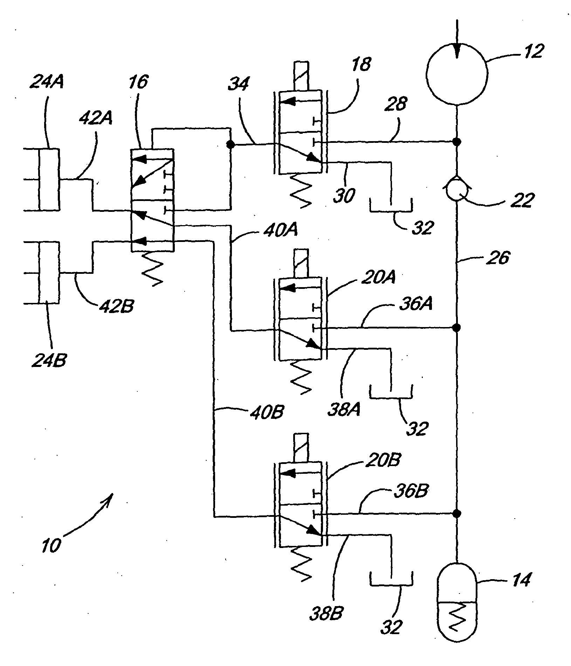

- Fig. 1: eine schematische Darstellung eines erfindungsgemäßen hydraulischen Schaltkreises für ein Notfall-/Ersatzlenksystem.

Fig. 1 zeigt einen erfindungsgemäßen hydraulischen Schaltkreis 10 für ein Notfall-/Ersatzlenksystem. Das System beziehungsweise der Schaltkreis 10 umfasst eine Flüssigkeitsdruckquelle wie beispielsweise eine Hydraulikpumpe 12 und/oder einen Hydrospeicher 14, ein Betriebsartsteuerventil 16, ein elektromagnetisch betätigbares Hauptventil 18 und zwei elektromagnetisch betätigbare Notfallventile 20A und 20B. Der Schaltkreis 10 kann ein Sperrventil, insbesondere ein Rückschlagventil 22, aufweisen.

Der hydraulische Schaltkreis 10 ist mit einer linken und einer rechten Bremse 24A, 24B, welche insbesondere zum Lenken eines Fahrzeugs verwendet werden können, verbunden. Die linke und die rechte Bremse 24A, 24B könnten lediglich für Service- bzw. Wartungszwecke vorgesehen sein, also dann, wenn die durch die stufenlosen Getriebe bewirkte Lenkung nicht verfügbar ist. Die Hydraulikpumpe 12 und der Hydrospeicher 14 sind beide mit der Haupthydraulikleitung 26 verbunden. Das Hauptventil 18 ist über die Leitung 28 mit der Hauptleitung 26 und über eine Leitung 30 mit einem Sumpf 32 verbunden. Das Hauptventil 18 ist auch mit dem Betriebsartsteuerventil 16 mittels der Leitung 34 verbunden. Die Notfallventile 20A, 20B sind jeweils mit der Hauptleitung 26 über die Leitungen 36A, 36B und mit dem Sumpf 32 über die Leitungen 38A, 38B verbunden. Die Notfallventile 20A, 20B sind jeweils mit dem Betriebsartsteuerventil 16 über die Leitungen 40A, 40B verbunden. Die linke und die rechte Bremse 24A, 24B ist jeweils mit dem Betriebsartsteuerventil 16 über die Leitungen 42A, 42B verbunden. Das Sperrventil 22 ist in der Hauptleitung 26 zwischen dem Hydrospeicher 14 und der Hydraulikpumpe 12 angeordnet, und zwar im Konkreten zwischen der Verbindung der Leitungen 28 und 26 und der Verbindung der Leitungen 36A und 26. Dementsprechend ist der Hydrospeicher 14 von der Hydraulikpumpe 12 und dem Hauptventil 18 aufgrund des Sperrventils 22 isoliert bzw. getrennt.

Während des normalen Betriebs wird das Betriebsartsteuerventil 16 aufgrund der auf das Ventil 16 wirkenden Federkraft im Fall einer drucklosen Verbindungsleitung 34 in die in der Figur gezeigten Stellung gebracht, so dass die Bremsen 24A, 24B in (hydraulischer/flüssiger) Verbindung mit den Verbindungsleitungen 40A, 40B sind. Das Betätigen des elektromagnetisch betätigbaren Hauptventils 18 ermöglicht es, dass unter Druck stehende Flüssigkeit von der Pumpe 12 in der Verbindungsleitung 34 anliegt. Der Druck in der Verbindungsleitung 34 bewegt das Betriebsartsteuerventil 16 in eine Position, die es ermöglicht, dass die Bremsen 24A, 24B in Verbindung mit der Verbindungsleitung 34 und dem Hauptventil 18 stehen. Dementsprechend ist - beispielsweise als Reaktion auf ein von einem Bediener erfolgtes Bremsen - die Hydraulikpumpe 12 zur gleichzeitigen Betätigung der beiden Bremsen 24A, 24B in hydraulischer Verbindung mit den beiden Bremsen 24A, 24B, wenn das Hauptventil 18 entsprechend betätigt ist. In diesem Betriebszustand sind aufgrund der Ventilposition des Betriebsartsteuerventils 16 die Notfallventile 20A, 20B von den Bremsen 24A, 24B getrennt.

In einem Ersatz- oder Notfall-Zustand liegt in der Verbindungsleitung 34 kein Druck an und die Feder des Betriebsartsteuerventils 16 steuert das Betriebsartsteuerventil 16 derart an, dass die Bremsen 24A, 24B in Verbindung mit den Verbindungsleitungen 40A, 40B zwischen dem Betriebsartsteuerventil 16 und den Notfallventilen 20A, 20B stehen. Dementsprechend werden die linken und rechten Bremsen 24A, 24B selektiv in Verbindung mit der Hydraulikpumpe 12 und/oder dem Hydrospeicher 14 über die selektive Betätigung der Notfallventile 20A, 20B gebracht. Somit kann das Fahrzeug auch bei einem ausgefallenen oder nicht vollständig funktionierenden Getriebe oder primäreren Lenksystem durch selektive Betätigung entweder der linken oder rechten Bremse 24A, 24B gelenkt werden. In diesem Betriebszustand ist das Hauptventil 18 aufgrund der Ventilstellung des Betriebsartsteuerventils 16 von den Bremsen 24A, 24B getrennt. Wenn das Hauptventil 18 nicht betätigt wird, ist es in einer Stellung, in welcher die Verbindungsleitung 34 und somit das Betriebsartsteuerventil 16 über die Verbindungsleitung 30 in Verbindung mit dem Sumpf 32 steht, so dass Flüssigkeit im System 10 zurückfließen kann. In vergleichbarer Weise stehen die Leitungen 40A, 40B mit dem Sumpf 32 in Verbindung, wenn die Notfallventile 20A, 20B nicht betätigt werden.

Sowohl das Hauptventil 18, als auch die Notfallventile 20A, 20B werden jeweils elektronisch betätigt. Das Betriebsartsteuerventil 16 kann entweder - wie in der Figur gezeigt - hydromechanisch oder elektronisch betätigt werden, wobei im letzteren Fall eine Betätigung des Ventils 16 als Reaktion auf Signale von entsprechenden Sensoren erfolgen könnte, welche eine Fehlfunktion oder einem Ausfall des primäreren Lenksystems detektieren. Weiterhin könnten die Notfallventile 20A, 20B elektronisch an ein Lenkrad oder an eine andere geeignete Eingabeeinheit zum Lenken eines Fahrzeugs gekoppelt sein, so dass ein Lenken im Ersatz- oder Notbetrieb in gewohnter Weise ausgeführt werden kann, wenngleich die Notfallventile 20A, 20B jeweils an entsprechende Bremspedale gekoppelt sein könnten. Das Hauptventil 18 kann in vergleichbarer Weise elektronisch oder mechanisch an ein Bremspedal oder an eine andere zum Bremsen geeignete Eingabeeinheit gekoppelt werden, so dass ein Bremsen während des normalen Betriebs in einer gewohnten Weise möglich ist. Es ist weiterhin denkbar, dass sogar im Notfall- bzw. Ersatzbetrieb das Fahrzeug durch Betätigung des (Fuß)-Bremspedals in gewohnter Weise gebremst werden kann. Hierzu könnten beispielsweise die Notfallventile 20A, 20B sowohl zur Lenkeingabeeinheit als auch zur Bremseingabeeinheit gekoppelt werden, wodurch die Bremsen 24A, 24B individuell in Abhängigkeit einer Lenkeingabe und gleichzeitig bei einer Bremseingabe angesprochen werden könnten. Es ist weiterhin möglich, das Betriebsartsteuerventil 16 mit der Bremseingabeeinheit derart zu koppeln, dass das Hauptventil 18 mit den Bremsen 24A, 24B als Reaktion einer Bremseingabe in Verbindung gebracht werden. Bei einem normalen oder ungestörten Betriebszustand des Fahrzeugs kann die elektrische Energie zur Ansteuerung der entsprechenden Ventile von der Lichtmaschine des Fahrzeugs erzeugt werden. Bei einer Störung der Lichtmaschine können die Ventile von der Batterie des Fahrzeugs angesteuert werden. Unter Druck stehende Flüssigkeit wird in einem ungestörten Betriebszustand des Fahrzeugs von der Hydraulikpumpe 12 zur Verfügung gestellt. Im Fall einer Störung der Hydraulikpumpe 12 kann der Hydrospeicher 14 als Ersatz- bzw. Notfalldruckquelle dienen, um dem System 10 unter Druck stehende Flüssigkeit zur Verfügung zu stellen.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die in den Schutzbereich der vorliegenden Erfindung fallen.

## Patentansprüche

1. Ersatz- oder Notfall-Lenksystem für ein Gleis- oder Raupenfahrzeug mit einer Flüssigkeitsdruckquelle (12, 14), einem Betriebsartsteuerventil (16), einem - vorzugsweise elektronisch betätigbaren - Hauptventil (18) und einer rechten und einer linken Bremse (24A, 24B), wobei das Hauptventil (18) mit der Flüssigkeitsdruckquelle (12) und dem Betriebsartsteuerventil (16) verbunden ist, wobei die Bremsen (24A, 24B) mit dem Betriebsartsteuerventil (16) verbunden sind, wobei in einem normalen Betriebszustand das Betriebsartsteuerventil (16) derart ansteuerbar ist, dass mindestens eine Bremse (24A, 24B) mit dem Betriebsartsteuerventil (16) und dem Hauptventil (18) hydraulisch verbunden ist, wobei die Flüssigkeitsdruckquelle (12, 14) zur gleichzeitigen Betätigung der Bremsen (24A, 24B) hydraulisch mit beiden Bremsen (24A, 24B) als Reaktion auf ein bedienergesteuertes Bremsen verbindbar ist, falls das Hauptventil (18) betätigt wird, **dadurch gekennzeichnet, dass** zwei Notfallventile (20A, 20B) vorgesehen sind, dass mindestens ein Notfallventil (20A, 20B) mit dem Betriebsartsteuerventil (16) und der Flüssigkeitsdruckquelle (12, 14) verbunden ist, dass in einem Ersatz- oder Notfallbetrieb das Betriebsartsteuerventil (16) derart angesteuert wird, dass die Bremsen (24A, 24B) mit dem Betriebsartsteuerventil (16) und den Notfallventilen (20A, 20B) hydraulisch verbindbar sind, und dass die linke und die rechte Bremse (24A, 24B) selektiv mit der Flüssigkeitsdruckquelle (12, 14) aufgrund einer selektiven Betätigung eines Notfallventils (20A, 20B) hydraulisch verbindbar ist, wodurch das Fahrzeug auch dann lenkbar ist, wenn das primäre Lenksystem nicht bestimmungsgemäß arbeitet.

2. Lenksystem nach Anspruch 1, **dadurch gekennzeichnet, dass** die Flüssigkeitsdruckquelle eine Hydraulikpumpe (12) und/oder einen Hydrospeicher (14) aufweist.

3. Lenksystem nach Anspruch 1 oder 2, **dadurch gekennzeichnet, dass** ein Sperrventil, insbesondere ein Rückschlagventil (22), vorgesehen ist, welches zwischen der Hydraulikpumpe (12) und dem Hydrospeicher (14) angeordnet ist.

4. Lenksystem nach Anspruch 3, **dadurch gekennzeichnet, dass** der Hydrospeicher (14) von der Hydraulikpumpe (12) und dem Hauptventil (18) durch das Sperrventil trennbar ist.

5. Lenksystem nach einem der vorhergehenden Ansprüche, **dadurch gekennzeichnet, dass** das Hauptventil (18) und/oder ein Notfallventil (20A, 20B) mit einem gemeinsamen Sumpf (32) verbindbar ist.

6. Lenksystem nach Anspruch 5, **dadurch gekennzeichnet, dass** die Notfallventile (20A, 20B) im nicht betätigten Zustand mit dem Sumpf (32) verbindbar sind.

7. Lenksystem nach einem der vorhergehenden Ansprüche, **dadurch gekennzeichnet, dass** das Hauptventil (18) derart angeordnet bzw. ausgebildet ist, dass es im nicht betätigten Zustand das Betriebsartsteuerventil (16) mit dem Sumpf (32) hydraulisch verbindet, wodurch die Flüssigkeit im Lenksystem (10) zurückfließen kann.

8. Lenksystem nach einem der vorhergehenden Ansprüche, **dadurch gekennzeichnet, dass** das Betriebsartsteuerventil (16) und/oder das Hauptventil (18) und/oder die Notfallventile (20A, 20B) elektronisch und/oder hydraulisch angesteuert werden.

9. Lenksystem nach Anspruch 8, **dadurch gekennzeichnet, dass** das Betriebsartsteuerventil (16) hydro-mechanisch angesteuert wird und das Hauptventil (18) und die Notfallventile (20A, 20B) elektronisch angesteuert werden.

10. Lenksystem nach Anspruch 8 oder 9, **dadurch gekennzeichnet, dass** das Betriebsartsteuerventil (16) aufgrund hydraulischer Signale betätigt wird, um von einem normalen Betriebszustand automatisch zu einem Notfall- oder Ersatz-Betriebszustand zu wechseln.

11. Lenksystem nach einem der vorhergehenden Ansprüche, **dadurch gekennzeichnet, dass** das Betriebsartsteuerventil (16) in Abhängigkeit von Signalen von Sensoren zum Detektieren einer Störung oder eines Ausfalles des primäreren Lenksystems angesteuert wird, um einen automatischen Wechsel des Betriebszustands zu bewirken.

12. Lenksystem nach einem der vorhergehenden Ansprüche, **dadurch gekennzeichnet, dass** die Notfallventile (20A, 20B) mit einer Lenkeingabeeinheit gekoppelt sind, wodurch die Ersatz- oder Notfalllenkung in gewohnter Weise erfolgen kann, und/oder dass das Hauptventil (18) mit einer Bremseingabeeinheit gekoppelt ist, wodurch in einem normalen Betriebszustand in gewohnter Weise gebremst werden kann.

13. Lenksystem nach einem der vorhergehenden Ansprüche, **dadurch gekennzeichnet, dass** die Notfallventile (20A, 20B) mit individuellen Bremspedalen gekoppelt sind.

14. Lenksystem nach einem der vorhergehenden Ansprüche, **dadurch gekennzeichnet, dass** die Notfallventile (20A, 20B) mit einer Lenkeingabeeinheit und einer Bremseingabeeinheit koppelbar sind, wodurch als Reaktion auf eine Lenkeingabe die Bremsen (24A, 24B) individuell ansteuerbar sind und/oder als Reaktion auf eine Bremseingabe die Bremsen (24A, 24B) gleichzeitig ansteuerbar sind.

15. Lenksystem nach einem der vorhergehenden Ansprüche, **dadurch gekennzeichnet, dass** das Betriebsartsteuerventil (16) mit einer Bremseingabeeinheit gekoppelt ist, wodurch das Hauptventil (18) aufgrund einer Bremseingabe mit den Bremsen (24A, 24B) verbindbar ist.

16. Lenksystem nach einem der vorhergehenden Ansprüche, **dadurch gekennzeichnet, dass** die elektrische Energie zur Betätigung von Ventilen (18, 20A, 20B) des Lenksystems (10) in einem normalen Betriebszustand des Fahrzeugs von einem elektrischen Generator, insbesondere von einer Lichtmaschine, zur Verfügung gestellt wird, und dass im Fall einer Störung des elektrischen Generators die Ventile (18, 20A, 20B) des Lenksystems (10) von einem elektrischen Speicher, insbesondere von der Fahrzeugbatterie, zur Verfügung gestellt wird.

17. Lenksystem nach einem der vorhergehenden Ansprüche, **dadurch gekennzeichnet, dass** in einem normalen Betriebszustand des Fahrzeugs unter Druck stehende Hydraulikflüssigkeit von der Hydraulikpumpe (12), im Fall einer Störung der Hydraulikpumpe (12), von einem Hydrospeicher (14), dem Lenksystem (10) zur Verfügung gestellt wird.

## Claims

1. A reserve or emergency steering system for a track or tracked vehicle with a fluid pressure source (12, 14), an operating mode control valve (16), a preferably electronically actuated main valve (18) and right and left brakes (24A, 24B), wherein the main valve (18) is connected to the fluid pressure source (12) and the operating mode control valve (16), wherein the brakes (24A, 24B) are connected to the operating mode control valve (16), wherein in a normal operating state the operating mode control valve (16) can be so controlled that at least one brake (24A, 24B) is connected hydraulically to the operating mode control valve (16) and the main valve (18), wherein the fluid pressure source (12, 14) can be connected hydraulically for simultaneous actuation of the brakes to both brakes (24A, 24B) in response to operator controlled braking, should the main valve (18) be actuated, **characterized in that** there are provided two emergency valves (20A, 20B), **in that** at least one emergency valve (20A, 20B) is connected to the operating mode control valve (16) and the fluid pressure source (12, 14), **in that** the operating mode control valve (16) is so controlled in a reserve or emergency operation that the brakes (24A, 24B) can be connected hydraulically to the operating mode control valve (16) and the emergency valves (20A, 20B), and **in that** the left and right brakes (24A, 24B) can be coupled selectively to the fluid pressure source (12, 14) in response to selective actuation of an emergency valve (20A, 20B), whereby the vehicle can also then be steered when the primary steering system is not operating as intended.

2. A steering system according to claim 1, **characterized in that** the fluid pressure source (12, 14) comprises a hydraulic pump (12) and/or a hydraulic accumulator (14).

3. A steering system according to claim 1 or 2, **characterized in that** a check valve, in particular a non-return valve (22) is provided between the hydraulic pump (12) and the hydraulic accumulator (14).

4. A steering system according to claim 3, **characterized in that** the hydraulic accumulator (14) can be isolated from the hydraulic pump (12) and the main valve (18) by the check valve.

5. A steering system according to any of the preceding claims, **characterized in that** the main valve (18) and/or an emergency valve (20A, 20B) can be connected to a common sump (32).

6. A steering system according to claim 5, **characterized in that** the emergency valves (20A, 20B) can be connected to the sump (32) in the non-actuated state.

7. A steering system according to any of the preceding claims, **characterized in that** the main valve (18) is so arranged or designed that it connects the operating mode control valve (16) hydraulically to the sump (32) in the non-actuated state, whereby the fluid in the steering system (10) can flow back.

8. A steering system according to any of the preceding claims, **characterized in that** the operating mode control valve (16) and/or the main valve (18) and/or the emergency valves (20A, 20B) are controlled electronically and/or hydraulically.

9. A steering system according to claim 8, **characterized in that** the operating mode control valve (16) is controlled hydro-mechanically and the main valve (18) and the emergency valves (20A, 20B) are controlled electronically.

10. A steering system according to claim 8 or 9, **characterized in that** the operating mode control valve (16) is actuated in response to hydraulic signals, in order to change automatically from a normal operating state to an emergency or reserve operating state.

11. A steering system according to any of the preceding claims, **characterized in that** the operating mode control valve (16) is controlled in dependence on signals from sensors for detecting a fault or failure of the primary steering system, in order to effect an automatic change of the operating state.

12. A steering system according to any of the preceding claims, **characterized in that** the emergency valves (20A, 20B) are coupled to a steering input unit, whereby the reserve or emergency steering can be effected in the usual way, and/or **in that** the main valve (18) is coupled to a brake input unit, whereby braking can be effected in the usual way in a normal operating state.

13. A steering system according to any of the preceding claims, **characterized in that** the emergency valves (20A, 20B) are coupled to individual brake pedals.

14. A steering system according to any of the preceding claims, **characterized in that** the emergency valves (20A, 20B) can be coupled to a steering input unit and a brake input unit, whereby the brakes (24A, 24B) can be controlled individually in response to a steering input and/or the brakes (24A, 24B) can be controlled simultaneously in response to a braking input.

15. A steering system according to any of the preceding claims, **characterized in that** the operating mode control valve (16) is coupled to a brake input unit, whereby the main valve (18) can be connected to the brakes (24A, 24B) in response to a braking input.

16. A steering system according to any of the preceding claims, **characterized in that** the electrical power for actuating valves (18, 20A, 20B) of the steering system (10) is made available in a normal operating state of the vehicle from an electric generator, in particular a dynamo, and **in that** in the case of a fault of the electrical generator the valves (18, 24A, 24B) of the steering system (10) is made available from an electrical store, in particular the vehicle battery.

17. A steering system according to any of the preceding claims, **characterized in that** hydraulic fluid under pressure is provided to the steering system (10) from the hydraulic pump (12) in a normal operating state and from a hydraulic accumulator (14) in the case of a fault of the hydraulic pump (12).

## Revendications

1. Système de direction en cas de secours pour un véhicule sur rails ou à chenilles, comportant une source de pression pour liquide (12, 14), une vanne de commande du mode de service (16), une vanne principale (18) - pouvant être actionnée par voie électronique - et un frein droit et un frein gauche (24A, 24B), la vanne principale (18) étant reliée à la source de pression pour liquide (12) et à la vanne de commande du mode de service (16), les freins (24A, 24B) étant reliés à la vanne de commande du mode de service (16), et, dans un mode de fonctionnement normal, la vanne de commande du mode de service (16) pouvant être activée de telle sorte qu'au moins un frein (24A, 24B) est relié par voie hydraulique à la vanne de commande du mode de service (16) et à la vanne principale (18), la source de pression pour liquide (12, 14) pouvant être reliée par voie hydraulique, en vue d'un actionnement simultané des freins (24A, 24B), aux deux freins (24A, 24B) en réponse à un freinage commandé par le conducteur, au cas où la vanne principale (18) est actionnée, **caractérisé en ce qu'**il est prévu deux vannes de secours (20A, 20B), **en ce qu'**au moins une vanne de secours (20A, 20B) est reliée à la vanne de commande du mode de service (16) et à la source de pression pour liquide (12, 14), **en ce que**, dans un mode de fonctionnement de secours, la vanne de commande du mode de service (16) est activée de telle sorte que les freins (24A, 24B) peuvent être reliés par voie hydraulique à la vanne de commande du mode de service (16) et aux vannes de secours (20A, 20B), et **en ce que** le frein gauche et le frein droit (24A, 24B) peuvent être reliés au choix à la source de pression pour liquide (12, 14) en raison d'un actionnement sélectif d'une vanne de secours (20A, 20B), moyennant quoi le véhicule peut aussi être dirigé lorsque le système de direction primaire ne travaille pas conformément à sa destination.

2. Système de direction selon la revendication 1, **caractérisé en ce que** la source de pression pour liquide comporte une pompe hydraulique (12) et/ou un réservoir hydraulique (14).

3. Système de direction selon la revendication 1 ou 2, **caractérisé en ce qu'**il est prévu une vanne d'arrêt, en particulier un clapet de non-retour (22), qui est montée entre la pompe hydraulique (12) et le réservoir hydraulique (14).

4. Système de direction selon la revendication 3, **caractérisé en ce que** le réservoir hydraulique (14) peut être séparé de la pompe hydraulique (12) et de la vanne principale (18) par l'intermédiaire de la vanne d'arrêt.

5. Système de direction selon l'une quelconque des revendications précédentes, **caractérisé en ce que** la vanne principale (18) et/ou une vanne de secours (20A, 20B) peuvent être reliées à un réservoir inférieur (32) commun.

6. Système de direction selon la revendication 5, **caractérisé en ce que** les vannes de secours (20A, 20B), à l'état non actionné, peuvent être reliées au réservoir inférieur (32).

7. Système de direction selon l'une quelconque des revendications précédentes, **caractérisé en ce que** la vanne principale (18) est agencée ou réalisée de telle sorte que, à l'état non actionné, elle relie par voie hydraulique la vanne de commande du mode de service (16) avec le réservoir inférieur (32), moyennant quoi le liquide dans le système de direction (10) peut être renvoyé.

8. Système de direction selon l'une quelconque des revendications précédentes, **caractérisé en ce que** la vanne de commande du mode de service (16) et/ou la vanne principale (18) et/ou les vannes de secours (20A, 20B) sont activées par voie électronique et/ou hydraulique.

9. Système de direction selon la revendication 8, **caractérisé en ce que** la vanne de commande du mode de service (16) est activée par voie hydromécanique et la vanne principale (18) et les vannes de secours (20A, 20B) sont activées par voie électronique.

10. Système de direction selon la revendication 8 ou 9, **caractérisé en ce que** la vanne de commande du mode de service (16) est actionnée à l'appui de signaux hydrauliques, afin de passer automatiquement d'un mode de fonctionnement normal à un mode de fonctionnement de secours.

11. Système de direction selon l'une quelconque des revendications précédentes, **caractérisé en ce que** la vanne de commande du mode de service (16) est activée en fonction de signaux de capteurs destinés à détecter un incident ou une panne du système de direction primaire, afin d'induire un passage automatique vers l'autre mode de fonctionnement.

12. Système de direction selon l'une quelconque des revendications précédentes, **caractérisé en ce que** les vannes de secours (20A, 20B) sont couplées à une unité d'entrée de direction, moyennant quoi la direction de secours peut s'effectuer de manière habituelle, et/ou **en ce que** la vanne principale (18) est couplée à une unité d'entrée de freinage, moyennant quoi il est possible de freiner de manière habituelle dans un mode de fonctionnement normal.

13. Système de direction selon l'une quelconque des revendications précédentes, **caractérisé en ce que** les vannes de secours (20A, 20B) sont couplées à des pédales de frein individuelles.

14. Système de direction selon l'une quelconque des revendications précédentes, **caractérisé en ce que** les vannes de secours (20A, 20B) peuvent être couplées à une unité d'entrée de direction et à une unité d'entrée de freinage, moyennant quoi les freins (24A, 24B) peuvent être activés individuellement en réponse à une entrée de direction, et/ou les freins (24A, 24B) peuvent être activés simultanément en réponse à une entrée de freinage.

15. Système de direction selon l'une quelconque des revendications précédentes, **caractérisé en ce que** la vanne de commande du mode de service (16) est couplée à une unité d'entrée de freinage, moyennant quoi, à l'appui d'une entrée de freinage, la vanne principale (18) peut être reliée aux freins (24A, 24B).

16. Système de direction selon l'une quelconque des revendications précédentes, **caractérisé en ce que** l'énergie électrique pour l'actionnement des vannes (18, 20A, 20B) du système de direction (10) est mise à disposition, dans un mode de fonctionnement normal, par un générateur électrique, en particulier une génératrice, et **en ce que**, en cas de panne du générateur électrique, les vannes (18, 20A, 20B) du système de direction (10) sont alimentées en énergie électrique par un accumulateur électrique, en particulier la batterie du véhicule.

17. Système de direction selon l'une quelconque des revendications précédentes, **caractérisé en ce que**, dans un mode de fonctionnement normal du véhicule, un liquide hydraulique sous pression est fourni au système de direction (10) par la pompe hydraulique (12) et, en cas de panne de la pompe hydraulique (12), il est fourni par un réservoir hydraulique (14).
